# EUROPEAN PATENT SPECIFICATION

(11) **EP 1 081 037 B1**
(45) Date of publication and mention of the grant of the patent: **19.04.2006**
(21) Application number: 00115575.3
(22) Date of filing: 19.07.2000
(51) Int. Cl.: B62K 11/04

(54) **Body frame for motorcycle**
Rahmen für Motorrad
Cadre pour motocyclette

(30) Priority: 31.08.1999 JP 24515099
(43) Date of publication of application: 07.03.2001
(73) Proprietor: HONDA GIKEN KOGYO KABUSHIKI KAISHA, Minato-ku, Tokyo (JP)
(72) Inventor: Nagashii, Toshihisa, 4-1, Chuo 1-chome, Wako-shi, Saitama (JP); Fukasawa, Kiyoshi, 4-1, Chuo 1-chome, Wako-shi, Saitama (JP)
(74) Representative: Liska, Horst

(56) References cited:
- EP-A- 0 825 099
- US-A- 5 375 677
- PATENT ABSTRACTS OF JAPAN vol. 1997, no. 03, 31 March 1997 (1997-03-31) & JP 08 290790 A (SUZUKI MOTOR CORP), 5 November 1996 (1996-11-05)

## Description

### Technical Field to Which the Invention Pertains

The present invention relates to a body frame for a motorcycle, including a head pipe for steerably supporting a front wheel and a pair of right and left main frames having hollow square cross-sections and extending rearwardly, downwardly from said head pipe, wherein an upper end portion of an engine can be disposed between lower portions of the main frames.

### Prior Art and Problem to be solved by the Invention

US 5,375,677 discloses a body frame for a motorcycle including a head pipe for supporting a rotary shaft for a handle, a pair of left and right main frame elements having a substantially rectangular cross section, extending rearwardly, downwardly from the head pipe, whereby each of these main frame elements is formed into a pipe. The main frame elements has a partition wall integrated with the entire peripheral walls to partition the inside of the main frame pipe into two front and rear chambers. The main frame elements are made by casting of a light alloy.

The above-described prior art (US 5,375,677) has the problem, that there exists different cross sections along the entire length of the main frames and that there are no tilted portions, which lead to more compactness of the construction. Furthermore, the different cross sections may lead to a reduction of the overall rigidity. At least, the casting of a main frame with different hollow portions is rather difficult and cost expensive.

Another body frame of this type has been known from Japanese Patent Laid-open No. Hei 8-290790.

This prior art body frame has a structure that upper halves of part of both main frames are curved on a vehicular center line side, to make compact the vehicular body. It has, however the following problem: namely, since the main frames are obtained by welding a pair of frame members each having an approximately U-shape in transverse cross-section to each other, the rigidity of the main frames may be possibly reduced by bending part of the frames as described above.

By the way, for a multi-cylinder engine in which a plurality of cylinders, for example, four cylinders are disposed in parallel in the width direction of a motorcycle, a gap between right and left main frames must be made relatively large at least at a location corresponding to the upper end portion of the engine. On the other hand, the upper end portion of the engine is generally disposed between lower portions of both the main frames. From this viewpoint, the vehicular body can be made compact by making narrow the gap between both the main frames at a portion higher than the upper portion of the engine.

In view of the foregoing, the present invention has been made, and an object of the present invention is to provide a body frame for a motorcycle, which is capable of making compact a vehicular body while ensuring a space for disposing an upper end portion of-an engine between both main frames, and preventing a reduction in rigidity of the main frames.

To achieve the above object, according to the present invention, there is provided a body frame for a motorcycle according to claim 1.

With this configuration, since the lower halves of the main frames extend substantially upright on both the sides of the upper end portion of the engine and the upper halves of the main frames are tilted on the vehicular center line side, it is possible to make narrow the width between the upper portions of the right and left main frames while ensuring a space for disposing the upper end portion of the engine between the lower portions of both the main frames and hence to make compact the vehicular body. Further, since each of the main frames is formed into a pipe having a continuous outer peripheral surface, it is possible to sufficiently ensure the rigidity of the main frame.

### Mode for Carrying Out the Invention

Hereinafter, one embodiment of the present invention will be described with reference to the accompanying drawings.

### Brief Description of the Drawings

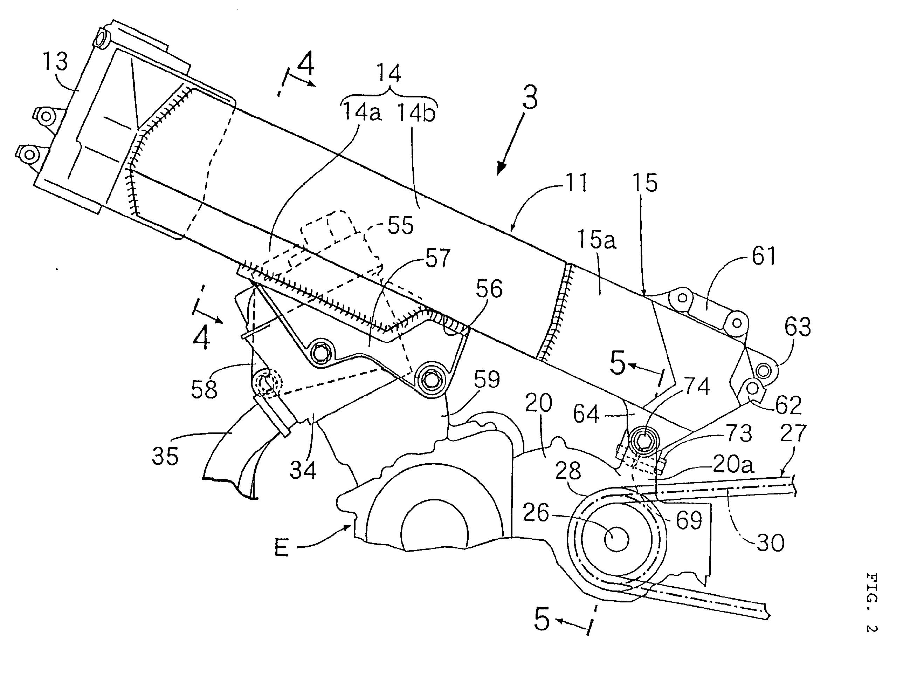

Fig. 1:
   A side view of a motorcycle.
Fig. 2:
   An enlarged side view showing part of an engine and a front frame.
Fig. 3:
   A view seen in the direction shown by an arrow 3 of Fig. 2.
Fig. 4:
   A sectional view taken on line 4-4 of Fig. 2, showing a main frame.
Fig. 5:
   A sectional view taken on line 5-5 of Fig. 2.

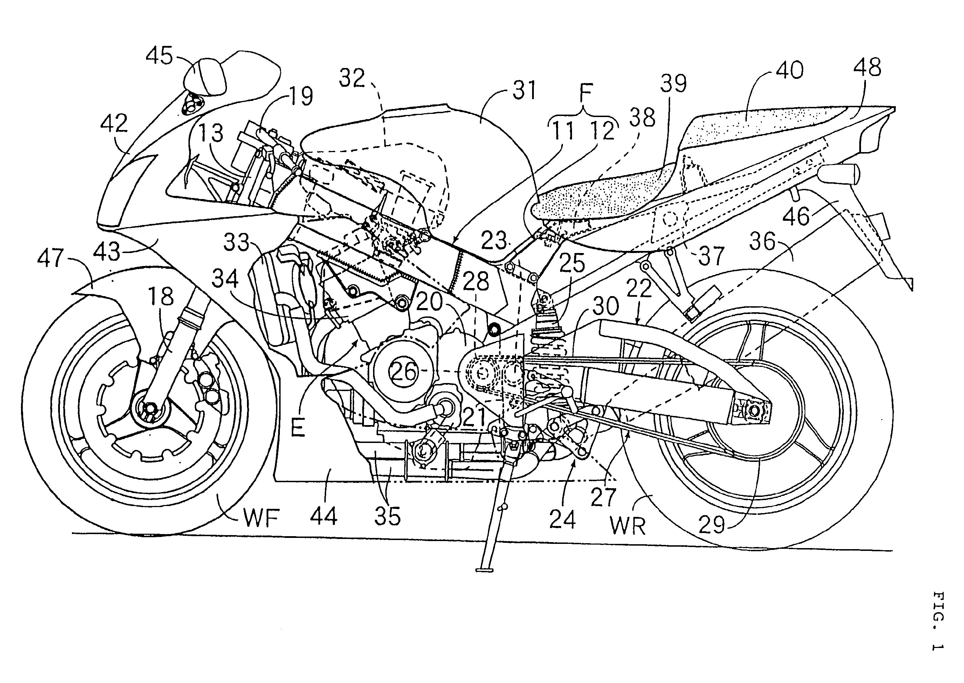

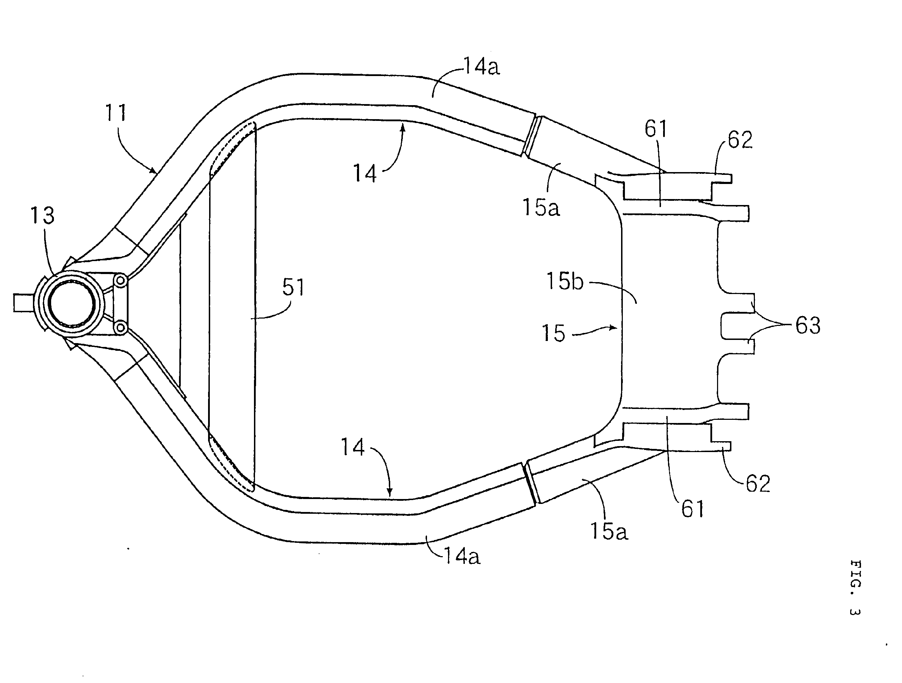

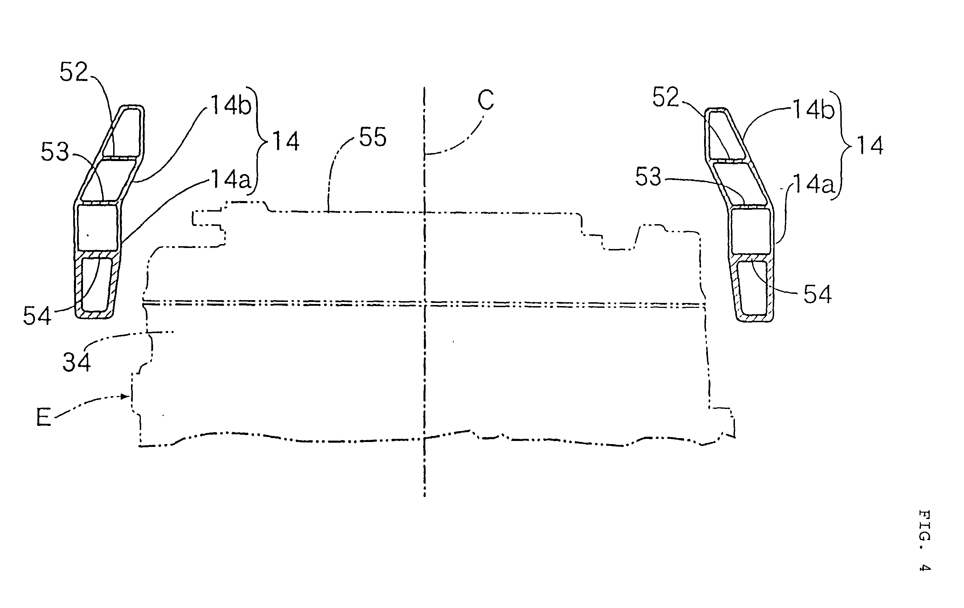

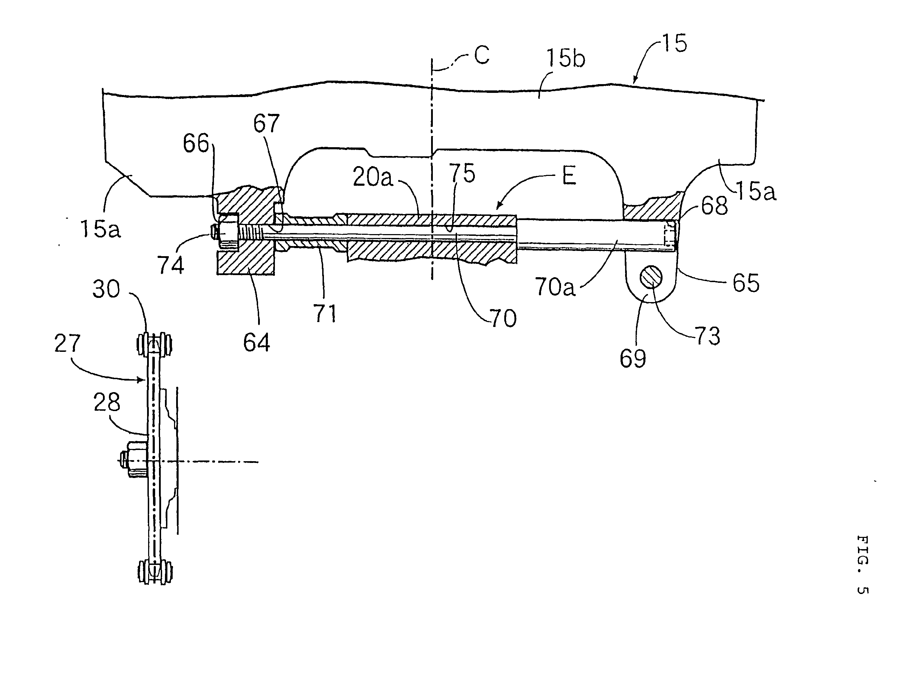

Figs. 1 to 5 show one embodiment of the present invention, wherein Fig. 1 is a side view of a motorcycle; Fig. 2 is an enlarged side view showing part of an engine and a front frame; Fig. 3 is a view seen in the direction shown by an arrow 3 of Fig. 2; Fig. 4 is a sectional view taken on line 4-4 of Fig. 2, showing a main frame; and Fig. 5 is a sectional view taken on line 5-5 of Fig. 2.

Referring first to Fig. 1, a body frame F of this motorcycle includes a front frame 11 on which an engine E is mounted, and a rear frame 12 connected to a rear end portion of the front frame 11. A head pipe 13 is provided at a front end of the front frame 11, and a front fork 18 for rotatably supporting a front wheel WF is steerably supported by the head pipe 13. A handlebar 19 is connected to an upper end of the front fork 18.

The engine E is of a multi-cylinder type in which a plurality of cylinders, for example, four cylinders are disposed in parallel along the width direction of the body frame F. The engine E is supported by the front frame 11. An arm supporting member 21 is supported by a rear portion of a crank case 20 of the engine E. A front end portion of a rear swing arm 22 for rotatably supporting a rear wheel WR is swingably supported by the arm supporting member 21 via a supporting shaft 23. A link mechanism 24 is provided between the arm supporting member 21 and the rear swing arm 22. A rear cushion unit 25 is provided between the link mechanism 24 and the rear portion of the front frame 11.

A power from an output shaft 26 of a transmission contained in the engine E is transmitted to the rear wheel WR via chain transmission means 27. The chain transmission means 27 includes a drive sprocket 28 fixed to the output shaft 26, a driven sprocket 29 fixed to the rear wheel WR, and an endless chain 30 wound around the sprockets 28 and 29. The chain transmission means 27 is disposed on the left side of the engine E as seen in the direction of forward movement of the motorcycle.

A fuel tank 31 supported by the front frame 11 and a front portion of the rear frame 12 is disposed over the engine E. An air cleaner 32 is disposed between the fuel tank 31 and the engine E, and a radiator 33 is disposed in front of the engine E.

A plurality of exhaust pipes, for example, four exhaust pipes 35 connected to a cylinder head 34 of the engine E project forwardly from the engine E, curve under the engine E, and extend on the right side of the rear wheel WR. The exhaust pipes 35 are finally connected to an exhaust muffler 36 disposed on the right side of the rear wheel WR.

The rear frame 12 includes a pair of right and left rear stays 37 which extend rearwardly, upwardly from a rear end of the front frame 11, and a pair of right and left seat rails 38 which extend rearwardly, upwardly from the rear end of the front frame 11 while passing over the rear stays 37 and are connected to rear ends of the rear stays 37. A main seat 39 on which a rider is to be sit is supported by the seat rails 38 at a position behind the fuel tank 31, and a pillion seat 40 on which a passenger is to be sit is supported by the seat rails 38 at a position separated rearwardly from the main seat 39.

The front side of the head pipe 13 provided at the front end of the front frame 11 is covered with a synthetic resin made front cowl 42. Both sides of a front portion of the vehicular body are covered with a synthetic resin made center cowl 43 continuous to the front cowl 42. Both sides of a portion, disposed under the engine E, of each of the exhaust pipes 35 are covered with a synthetic resin made lower cowl 44 continuous to the center cowl 43. Rear view mirrors 45 are mounted on the right and left sides of an upper portion of the front cowl 42.

A rear fender 46 for covering the upper side of the rear wheel WR is mounted to the rear frame 12, and a front fender 47 for covering the upper side of the front wheel WF is mounted to the front fork 18. Most of the rear frame 12 and the rear fender 46 are covered with a rear cowl 48.

Referring to Figs. 2 to 4, the front frame 11 includes the head pipe 13, a pair of right and left main frames 14 extending rearwardly, downwardly from the head pipe 13, and a bracket 15 for connecting rear ends of the main frames 14 to each other. A supporting stay 51 for supporting the air cleaner 32 is provided between front portions of the main frames 14. The supporting stay 51 serves as a cross-member for reinforcing the main frames 14.

The main frame 14 is formed from an ingot of an aluminum alloy or the like into a pipe having a square cross-section and having a continuous outer peripheral surface by a known extrusion process. The inside of the main frame 14 is vertically partitioned into a plurality of, for example, four parts by integrally providing ribs 52, 53 and 54 on both inner side surfaces of the main frame 14.

By the way, a head cover 55 and a portion of a cylinder head 34, which constitute an upper end portion of the engine E, are disposed between lower portions of the main frames 14. In this viewpoint, the main frames 14 are formed by extrusion into transverse cross-sectional shapes having lower halves 14a extending substantially upright on both the sides of the head cover 55 and the cylinder head 34 and upper halves 14b curved from the upper ends of the lower halves 14a onto a vehicular center line C side.

The main frames 14, which have been formed by extrusion as described above, are bent in such a manner that longitudinal intermediate portions of the main frames 14 project outwardly.

An engine supporting member 57 is welded to the back surface of the longitudinal intermediate portion of the left main frame 14, and an engine supporting member 58 is welded to the back surface of the longitudinal intermediate portion of the right main frame 14. In order to avoid interference with the engine E, a lower rear portion of each of the main frames 14 is partially cut in such a manner that the lowermost one of the ribs 52, 53 and 54, that is, the lowermost rib 54 becomes the bottom of the main frame 14, to form a cutout 56. By provision of the cutout 56, an opening is formed on the upper side of the rear end of the rib 54; however, such an opening is closed with the engine supporting member 57 or 58 welded to the main frame 14.

The engine supporting members 57 and 58 are disposed on both the sides of the upper end portion of the engine E, and the head cover 55 and the cylinder head 34 of the engine E are fastened to and supported by the engine supporting members 57 and 58, respectively.

The bracket 15 integrally includes a pair of frame side portions 15a disposed over a front end portion of the rear swing arm 22 for rotatably supporting the rear wheel WR and welded to the rear ends of the main frames 14, and a single cross-pipe 15b for connecting both the frame side portions 15a to each other. Such a bracket 15 is formed from an aluminum alloy or the like by casting.

Plate portions 61, on which front end portions of the seat rails 38 of the rear frame.12 are to be mounted and fastened, are integrally provided on both the frame side portions 15a of the rear end portion of the front frame 11, that is, the bracket 15 in such a manner as to project upwardly therefrom. Plate portions 62, on which front end portions of the rear stays 37 of the rear frame 12 are to be mounted and fastened, are integrally provided on both the frame side portions 15a of the bracket 15 in such a manner as to project rearwardly therefrom.

A pair of connection plate portions 63 to be connected to an upper end portion of the rear cushion unit 25 are integrally provided on the cross-pipe portion 15b of the bracket 15 in such a manner as to project rearwardly therefrom.

Referring to Fig. 5, a pair of right and left hanger portions 64 and 65, disposed on both sides of the vehicular center line C, are integrally provided on lower portions of the frame side portions 15a of the bracket 15 in such a manner as to project downwardly therefrom. On the other hand, a boss portion 20a is integrally provided on an upper rear portion of the crank case 20 of the engine E at a position between both.the hanger portions 64 and 65. The boss portion 20a is supported by the body frame F via a through-bolt 70 having on its one end side an enlarged diameter head 70a extending relatively longer in the axial direction. The through-bolt 70 is inserted in both the hanger portions 64 and 65 and in the boss portion 20a.

The hanger portion 64, which is located on the same side as the side on which the chain transmission means 27 is disposed with respect to the vehicular center line C (on the left side with respect to the vehicular center line C in this embodiment), has an outer fitting hole 66 and an insertion hole 67 having a diameter smaller than that of the fitting hole 66. A nut 74 screwed with the other end of the through-bolt 70 is fitted in the fitting hole 66 in such a manner as to be non-rotatable around its axial line. The fitting hole 66 and the insertion hole 67 are coaxially disposed for allowing the through-bolt 7 to pass therethrough.

The hanger portion 65, which is located on the side opposed to the side on which the chain transmission means 27 is disposed with respect to the vehicular center line C (on the right side with respect to the vehicular center line C in this embodiment), has an insertion hole 68 for allowing the enlarged diameter head 70a formed on one side of the through-bolt 70. The insertion hole 68 is disposed coaxially with the fitting hole 66 and the insertion hole 67. The hanger portion 65 also has a slit-portion 69 which is continuous to the inner surface of the insertion hole 68 and which is opened downwardly.

A fastening bolt 73, which is capable of reducing the diameter of the insertion hole 68 by making narrow the width of the slit portion 69, is screwed in the hanger portion 65. By fastening the fastening bolt 73 to the hanger portion 65, the enlarged diameter head 70a of the through-bolt 70 can be pressedly held by the hanger portion 65.

The boss portion 20a has an insertion hole 75 coaxial with the fitting hole 66 and the insertion holes 67 and 68. A cylindrical spacer 71 for allowing the through-bolt 70 to pass therethrough is interposed between the boss portion 20a and the hanger portion 64. The through-bolt 70 is inserted from the hanger portion 66 side into the insertion holes 68 and 75, spacer 71, and the insertion holes 67 and 66. The enlarged diameter head 70a has an outside diameter allowed to be inserted in the insertion hole 68 but not allowed to be inserted in the insertion hole 75. In this way, by fastening the nut 74 to the other end of the through-bolt 70 until the enlarged diameter head 70a fitted in the insertion hole 68 of the hanger portion 65 comes into contact with the boss portion 20a, the axial position of the through-bolt 70 relative to the boss portion 20a is adjusted.

The function of this embodiment will be described below. The front frame 11 constituting the body frame F in co-operation with the rear frame 12 includes the head pipe 13 for steerably supporting the front wheel WF, the pair of right and left main frames 14 extending rearwardly, downwardly from the head pipe 13, and the bracket 15 for connecting the rear ends of the main frames 14 to each other. The bracket 15, which is formed by casting, integrally includes the pair of frame side portions 15a welded to the rear ends of the main frames 14 and the single cross-pipe portion 15b for connecting both the frame side portions 15a to each other. The upper portion of the engine E is supported by both the main frames 14 and both the frame side portions 15a, and the front end portion of the rear swing-arm 22 for rotatably supporting the rear wheel WR is swingably supported by the engine E at a position under both the frame side portions 15a.

Since the upper portion of the engine E is supported by the main frames 14 and the bracket 15, the front frame 11 of the body frame F can eliminate the necessity of provision of the down tubes which have been required to be provided, and instead may include only the main frames 14, and the bracket 15 which is formed by casting and which integrally includes the pair of frame side portions 15a and the single cross-pipe portion 15b. As a result, it is possible to make compact the front frame 11 while reducing the number of parts of the front frame 11 and also reducing the weight of the front frame 11. Since the welding step for connecting both the frame side portions 15a to each other by means of the cross-pipe portion 15b can be eliminated and also the works for connecting the down tubes which have been required can be eliminated, it is possible to reduce the number of steps of assembling the front frame 11. Since the front end portion of the rear swing arm 22 for rotatably supporting the rear wheel WR is swingably supported by the engine E and the frame side portions 15a are-disposed over the front end portion of the rear swing arm 22, the bracket 15 integrally including both the frame side portions 15a and the cross-pipe portion 15b can be formed by casting using a relatively small-sized mold, with a result that it is possible to suppress the casting cost.

Since the main frame 14 is formed by extrusion into the transverse sectional shape having the lower half 14a extending substantially upright on both the sides of the upper end portion of the engine E and the upper half 14b bent from the upper end of the lower half 14a onto the vehicular center line C side, the upper half 14b of the main frame 14 is tilted onto the vehicular center line C side. Accordingly, it is possible to make narrow the width between the upper portions of the main frames 14 while ensuring the space for disposing the upper end portion of the engine E between the lower portions of the right and left main frames 14, and hence to make compact the vehicular body. Further, since the main frame 14 is formed into the pipe having a continuous outer peripheral surface by extrusion, the transverse sectional shape of the main frame 14 can be kept constant over the entire length in the longitudinal direction upon extrusion, with a result that it is possible to prevent the rigidity of the main frame 14 from being reduced.

The pair of right and left hanger portions 64 and 65 are provided on the bracket 15 of the body frame F in such a manner as to project downwardly therefrom. Of these hanger portions 64 and 65, the hanger portion 65 disposed on the side opposed to the side on which the chain transmission means 27 is disposed with respect to the vehicular center line C has the insertion hole 68 for allowing the enlarged diameter head 70a formed on one end side of the through-bolt 70 to pass therethrough, and the slit-portion 69 which is continuous to the inner surface of the insertion hole 68 and which is opened downwardly, wherein the fastening bolt 73, which is capable of reducing the diameter of the insertion hole 68 by making narrow the width of the slit portion 69, is screwed in the hanger portion 65. Further, the spacer 71 is interposed between the hanger 64 and the boss portion 20a, and the through-bolt 70 is inserted in both the hanger portions 64 and 65 and in the boss portion 20a with its axial position relative to the boss portion 20a adjusted.

Accordingly, by fastening the fastening bolt 73 in such a manner as to make narrow the.width of the slit portion 69 in the state in which the through-bolt 70 is inserted in both the hanger portions 64 and 65 and in the boss portion 20a with its axial position relative to the boss portion 20a of the crank case 20 of the engine E adjusted, the diameter of the insertion-hole 68 can be reduced and thereby the enlarged diameter head 70a can be pressedly held by the hanger portion 65. As a result, the body frame F can be integrated with the engine E and thereby the engine E is allowed to effectively function as the member for reinforcing the body frame F, irrespective of the accuracy of the width of the boss portion 20a and the accuracy of the gap between both the hanger portions 64 and 65 in the direction along the axial line of the through-bolt 70. Further, since the hanger portion 65 having the slit portion 69 is disposed opposite to the chain transmission means 27 with respect to the vehicular center line C, it is possible to avoid the occurrence of an inconvenience that a relatively large load is applied to the slit portion 69 resulting from the disposition of the chain transmission means 27, and hence to prevent the supporting strength of the engine E from being affected by the disposition of the chain transmission means 27.

While the embodiment of the present invention has been described in detail, the present invention is not limited thereto, and it is to be understood that various changes in design may be made without departing from the scope of claims.

### Effect of the Invention

As described above, according to the present invention, it is possible to make narrow the width between the upper portions of the right and left main frames while ensuring a space for disposing the upper end portion of an engine between both the main frames and hence to make compact the vehicular body, and also to prevent the reduction in rigidity of the main frames.

In summary, it is an object to provide a body frame for a motorcycle, including a head pipe for steerably supporting a front wheel and a pair of right and left main frames having hollow square cross-sections and extending rearwardly, downwardly from the head pipe, wherein an upper end portion of an engine is disposed between lower portions of the main frames, which body frame is intended to make compact the vehicular body while ensuring a space for disposing the upper end portion of the engine between both the main frames and to prevent a reduction in rigidity of the main frames.

A main frame is formed into a pipe having a continuous outer peripheral surface. The pipe has a transverse cross-sectional shape composed of a lower half extending substantially upright on each side of an upper portion of an engine and an upper half curved from the upper end of the lower half onto a vehicular center line side.

## Claims

1. A body frame for a motorcycle, including a head pipe (13) for steerably supporting a front wheel (WF) and a pair of right and left main frames (14) having hollow square cross-sections and extending rearwardly, downwardly from said head pipe (13), wherein an upper end portion of an engine (E) can be disposed between lower portions of said main frames (14),
each of said main frames (14) is formed into a pipe having a continuous outer peripheral surface,
**characterized in that** each of said pipes has a transverse cross-sectional shape being identical over the entire length of the pipe and being formed by extrusion and **in that** each of the pipes over its entire length is composed of a lower half (14a) extending substantially upright on each side of said upper portion of said engine (E) and an upper half (14b) the main frame outer side and the main frame inner side of which is tilted from the upper end of said lower half (14a) onto a vehicular center line side (C).

2. Body frame according to claim 1, **characterized in that** the main frame (14) is vertically partitioned into a plurality of parts by integrally providing ribs (52, 53, 54) between inner surfaces of the main frame inner side and the main frame outer side.

3. Body frame according to claim 2, **characterized in that** a lower rear portion of each (14a) of the main frames (14) is partially cut in such a manner that the lowermost rib (54) becomes the bottom of the main frame (14), to form a cutout (56).

4. Body frame according to claim 3, **characterized in that** an opening formed by the cutout (56) is closed with engine supporting members (57, 58) welded to the main frame (14).

## Patentansprüche

1. Karosserierahmen für ein Motorrad, umfassend ein Kopfrohr (13) zur lenkbaren Lagerung eines Vorderrades (WF) und ein Paar von rechten und linken Hauptrahmen (14), welche hohle, rechteckige Querschnitte aufweisen und sich vom Kopfrohr (13) nach hinten unten erstrecken, wobei ein oberer Endabschnitt eines Motors (E) zwischen unteren Abschnitten dieser Hauptrahmen (14) angeordnet sein kann,
wobei jeder der Hauptrahmen (14) als ein Rohr ausgebildet ist mit einer ununterbrochenen äußeren Umfangsfläche,
**dadurch gekennzeichnet, dass** jedes Rohr eine transversale Querschnittsform aufweist, welche über die gesamte Länge des Rohrs identisch ist und durch Extrusion ausgebildet ist, und dass jedes Rohr über seine gesamte Länge aus einer unteren Hälfte (14a), welche sich im Wesentlichen aufrecht auf jeder Seite des oberen Abschnitts des Motors (E) erstreckt, und einer oberen Hälfte (14b), deren äußere Hauptrahmenseite und deren innere Hauptrahmenseite vom oberen Ende der unteren Hälfte (14a) hin zu einer Fahrzeugmittellinie (C) geneigt sind, gebildet ist.

2. Karosserierahmen nach Anspruch 1, **dadurch gekennzeichnet, dass** der Hauptrahmen (14) vertikal in mehrere Teile unterteilt ist durch integrales Bereitstellen von Rippen (52, 53, 54) zwischen inneren Oberflächen der inneren Hauptrahmenseite und der äußeren Hauptrahmenseite.

3. Karosserierahmen nach Anspruch 2, **dadurch gekennzeichnet, dass** ein unterer hinterer Abschnitt von jedem (14a) der Hauptrahmen (14) partiell derart geschnitten ist, dass die unterste Rippe (54) zum Boden des Hauptrahmens (14) wird, um einen Ausschnitt (56) zu bilden.

4. Karosserierahmen nach Anspruch 3, **dadurch gekennzeichnet, dass** eine durch den Ausschnitt (56) gebildete Öffnung mit Motorstützelementen (57, 58) geschlossen ist, welche an den Hauptrahmen (14) geschweißt sind.

## Revendications

1. Cadre pour motocyclette, comprenant un tube de fourche (13) destiné à supporter de manière orientable une roue avant (WF) et une paire de cadres principaux (14) ayant des sections transversales carrées creuses et s'étendant vers l'arrière, vers le bas à partir dudit tube de fourche (13), dans lequel une partie d'extrémité supérieure d'un moteur (E) peut être disposée entre des parties inférieures desdits cadres principaux (14), chacun desdits cadres principaux (14) ayant une forme de tube comportant une surface périphérique externe continue,
**caractérisé en ce que** chacun desdits tubes a une forme en coupe transversale qui est identique sur la totalité de la longueur du tube et qui est formé par extrusion, et **en ce que** chacun des tubes comporte sur la totalité de sa longueur une moitié inférieure (14a) qui s'étend essentiellement à la verticale de chaque côté de ladite partie supérieure dudit moteur (E) et une moitié supérieure (14b) dont le côté externe de cadre principal et le côté interne de cadre principal sont inclinés à partir de l'extrémité supérieure de ladite moitié inférieure (14a) du côté de l'axe central d'un véhicule (C).

2. Corps de cadre selon la revendication 1, **caractérisé en ce que** le cadre principal (14) est divisé verticalement en une pluralité de pièces par des nervures (52, 53, 54) d'un seul tenant entre des surfaces internes du côté interne de cadre principal et du côté externe de cadre principal.

3. Corps de cadre selon la revendication 2, **caractérisé en ce qu'**une partie arrière inférieure de chacun (14a) des cadres principaux (14) est en partie découpée de telle sorte que la nervure la plus basse (54) devient l'embase du cadre principal (14), afin de former une découpe (56).

4. Corps de cadre selon la revendication 3, **caractérisé en ce qu'**une ouverture formée par la découpe (56) est fermée par des éléments de support de moteur (57, 58) soudés sur le cadre principal (14).
